# FASCICULE DE BREVET EUROPEEN

(11) **EP 2 286 065 B1**
(45) Date de publication et mention de la délivrance du brevet: **31.07.2013**
(21) Numéro de dépôt: 09745900.2
(22) Date de dépôt: 20.04.2009
(51) Int. Cl.: F01D 5/06, F01D 5/08, F02C 7/18

(54) **ROTOR DE COMPRESSEUR D'UNE TURBOMACH INE COMPORTANT DES MOYENS DE PRELEVEMENT D'AIR CENTRIPETE**
VERDICHTERROTOR FÜR EINE TURBOMASCHINE MIT ZENTRIPETALER ENTLÜFTUNGSVORRICHTUNG
COMPRESSOR ROTOR FOR A TURBOMACHINE INCLUDING CENTRIPETAL AIR BLEEDING MEANS

(30) Priorité: 24.04.2008 FR 0802296
(43) Date de publication de la demande: 23.02.2011
(73) Titulaire: Snecma, 75015 Paris (FR)
(72) Inventeur: PEGOUET, Benjamin, 95000 CERGY (FR)
(74) Mandataire: Ramey, Daniel
(86) Numéro de dépôt international: PCT/FR2009/000462
(87) Numéro de publication internationale: WO 2009/138581

(56) Documents cités:
- EP-A- 1 329 591
- FR-A- 2 672 943
- US-A- 3 085 400

## Description

La présente invention concerne des moyens de prélèvement d'air centripète dans un rotor de compresseur d'une turbomachine telle qu'un turboréacteur ou un turbopropulseur d'avion.

Les disques aubagés d'un rotor de compresseur sont reliés entre eux par une paroi coaxiale de révolution sensiblement cylindrique ou tronconique qui s'étend entre les disques. Cette paroi de liaison des disques peut être formée d'une seule pièce avec un premier disque ou être rapportée et fixée à une de ses extrémités axiales sur une face latérale de ce premier disque, et son extrémité axiale opposée peut comprendre une bride annulaire fixée par des moyens du type vis/écrou sur un second disque.

Il est connu d'équiper ce rotor de moyens de prélèvement d'air à écoulement centripète, pour alimenter des systèmes de ventilation et/ou de refroidissement d'étages aval du compresseur et des jantes de turbine de la turbomachine, et pour assurer la purge de la turbine.

Dans la technique actuelle, ces moyens de prélèvement comprennent des passages traversants formés dans la paroi de liaison des disques de compresseur et débouchant dans une chambre annulaire formée à l'intérieur de la paroi entre deux disques du rotor (FR-A1-2 672 943).

Une partie de l'air s'écoulant dans la veine du compresseur est prélevée par les passages traversants de la paroi de liaison des disques et passe dans la chambre annulaire où elle s'écoule de manière centripète le long des disques de rotor, puis circule d'amont en aval dans la turbomachine, à l'extérieur d'un fourreau cylindrique axial, pour atteindre la turbine. Cependant, les turbulences et les pertes de charge au centre de la chambre annulaire entre les disques de rotor sont importantes, ce qui amène à effectuer le prélèvement d'air sur un étage aval du compresseur, et se traduit par une augmentation de la consommation spécifique de la turbomachine.

De plus, l'air prélevé s'échauffe à cause de sa vitesse de rotation élevée par rapport à celle des disques. Lorsque le coefficient Ke d'entraînement de l'air (qui est égal au rapport de la vitesse tangentielle de l'air prélevé et circulant dans le compresseur sur la vitesse de rotation du rotor du compresseur de la turbomachine) est supérieur à 1, il est nécessaire d'augmenter le débit d'air prélevé pour assurer un bon refroidissement des composants de la turbine. Cependant, dans certaines zones, en particulier dans la chambre inter-disques et au voisinage du fourreau cylindrique, le coefficient Ke peut atteindre 2,5 dans la technique actuelle.

Pour réduire cet inconvénient, on a déjà proposé de réduire la vitesse de l'air dans la chambre inter-disques au moyen d'ailettes sensiblement radiales agencées sur les faces en regard des disques définissant la chambre. Cependant, ces ailettes ne permettent pas de réduire les pertes de charge dans la zone centrale de la chambre.

L'invention a notamment pour but d'apporter une solution plus simple, plus efficace et plus économique à ces problèmes de la technique actuelle.

Elle propose à cet effet un rotor de compresseur d'une turbomachine, comprenant au moins deux disques coaxiaux portant des aubes et reliés entre eux par une paroi de révolution coaxiale sensiblement cylindrique, et des moyens de prélèvement d'air centripète comportant des passages d'air traversant la paroi et débouchant dans une chambre annulaire formée à l'intérieur de la paroi entre les disques, et des ailettes sensiblement radiales portées par un des disques, caractérisé en ce que les ailettes sont écartées axialement du disque et alignées en direction radiale avec les passages de la paroi, ces ailettes étant reliées uniquement par une de leurs extrémités axiales au disque.

Selon l'invention, les ailettes redressent le flux d'air prélevé dès sa sortie des passages de la paroi de liaison des disques. Elles s'étendent dans la zone centrale de la chambre, ce qui permet de limiter les recirculations et les tourbillons dans cette zone en forçant l'air à s'écouler de manière centripète. L'invention permet donc d'éviter l'éclatement des jets d'air en sortie des passages traversants et la formation de tourbillons générateurs de pertes de charge. Du fait de cette diminution des pertes de charge, il est envisageable de prélever l'air sur un étage du compresseur plus en amont, ce qui permet de diminuer la consommation spécifique de la turbomachine, ainsi que la température de l'air prélevé. Les ailettes qui tournent à la même vitesse que le rotor du compresseur limitent en outre l'augmentation de vitesse de l'air prélevé par rapport à celle du rotor (Ke = 1). L'air qui parvient sur les faces radiales des disques s'écoule de façon naturelle le long des disques en direction de l'axe de rotation en formant sur ces disques des couches qui s'apparentent à des phénomènes atmosphériques ou océaniques et qui sont appelées couches d'Ekman.

De plus, selon une caractéristique de l'invention, les ailettes sont reliées par une de leurs extrémités axiales à des moyens de support fixés à un des disques, chacune de ces ailettes ayant ainsi une de leurs extrémités qui est libre.

Les passages d'air peuvent être formés dans la paroi de révolution, en aval d'un joint à labyrinthe destiné à coopérer avec un redresseur monté entre les deux disques du rotor. Les ailettes peuvent être portées par le disque aval délimitant la chambre.

De préférence, les ailettes de redressement sont régulièrement réparties autour de l'axe du rotor et inclinées par rapport à l'axe du rotor.

Ces ailettes peuvent être des plaquettes planes. En variante, elles sont des aubes comportant chacune un bord d'attaque radialement externe et un bord de fuite radialement interne.

Les ailettes peuvent être reliées indépendamment les unes des autres au disque précité. Chaque ailette peut alors être formée d'une seule pièce avec un élément de support à orientation sensiblement radiale qui est fixé sur le disque. En variante, les ailettes sont rapportées et fixées sur un élément annulaire sensiblement radial qui est fixé, par exemple par des moyens du type vis-écrou, sur une bride annulaire du disque, ce qui autorise le démontage de ces ailettes.

Les ailettes sont donc portées par au plus un élément annulaire et ne sont donc pas situées entre deux éléments annulaires. Ceci permet de ne pas « emprisonner » l'air s'écoulant entre les ailettes, qui a ainsi une influence sur l'écoulement de l'air au voisinage des ailettes. En effet, le fait de fixer les ailettes sur un seul élément annulaire permet d'augmenter virtuellement la partie active (en largeur) des ailettes, la partie du débit d'air ne passant pas par les ailettes étant entraînée, grâce aux frottements visqueux, par l'autre partie du débit d'air qui passe entre les ailettes.

Les extrémités radialement externes des ailettes sont de préférence séparées d'une distance radiale donnée de la paroi comportant les passages d'air. Les ailettes peuvent s'étendre sur une partie seulement de la dimension radiale des disques en direction de l'axe de rotation.

Les ailettes ont une largeur ou dimension axiale qui peut être proche du diamètre des passages d'air de la paroi de révolution. Cette dimension est de préférence inférieure à la moitié de la distance axiale séparant les disques, et par exemple inférieure à 30% de cette distance.

Les ailettes ont donc une largeur réduite, ce qui permet de réduire le temps d'assemblage des pièces, ainsi que le coût et la masse des ailettes.

Malgré la relative faible largeur des ailettes selon l'invention, la majorité de l'air prélevé se dirige naturellement vers les ailettes, étant donné que c'est le passage privilégié. C'est en effet le chemin offrant le moins de pertes de charge, donc le plus facile pour l'écoulement d'air

Sur le disque amont qui est à distance des ailettes, l'effet de celles-ci est moindre et l'on pourrait s'attendre à des vitesses centripètes de l'air faibles voire des tourbillons néfastes à l'écoulement, mais un effet dynamique créé par la rotation du rotor forme les couches d'Ekman précitées qui favorisent l'écoulement de l'air de manière centripète. Ainsi, dans ces couches, les vitesses radiales sont de nouveau importantes et favorisent l'écoulement centripète.

La présente invention concerne également une turbomachine, telle qu'un turboréacteur ou un turbopropulseur d'avion, caractérisée en ce qu'elle comprend un rotor de compresseur tel que décrit ci-dessus.

La présente invention sera mieux comprise et d'autres détails, caractéristiques et avantages de la présente invention apparaîtront plus clairement à la lecture de la description suivante faite à titre d'exemple non limitatif et en référence aux dessins annexés, dans lesquels :
- la figure 1 est une demi-vue schématique partielle en coupe axiale d'une turbomachine comprenant notamment un compresseur, une chambre de combustion et une turbine ;
- la figure 2 est une demi-vue schématique partielle en coupe axiale d'un rotor de compresseur équipé de moyens de prélèvement d'air centripète selon l'invention, à plus grande échelle que la figure 1 ;
- la figure 3 est une vue en coupe selon la ligne A-A de la figure 2 ;
- la figure 4 est une vue schématique en perspective d'une variante de réalisation des moyens de prélèvement d'air selon l'invention ; et
- la figure 5 est un graphe représentant l'évolution de la vitesse radiale de l'air dans une chambre inter-disques d'un rotor de compresseur, à un rayon donné, en fonction de la largeur ou dimension axiale dans cette chambre.

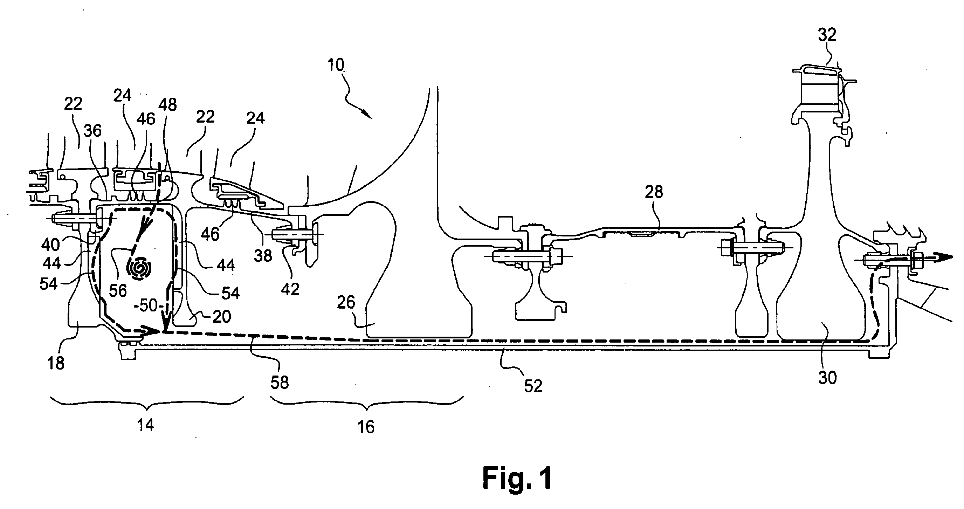

On se réfère d'abord à la figure 1 qui représente une partie d'une turbomachine 10 équipée de moyens 44, 48 de prélèvement d'air centripète selon la technique antérieure.

La turbomachine comprend notamment un : compresseur, une chambre de combustion et une turbine. Le compresseur= 14, 16 partiellement représenté comprend un module amont comportant plusieurs étages axiaux 14 de compression et un module aval comportant un étage centrifuge 16 de compression. Chaque étage axial 14 du compresseur comprend une roue de rotor formée d'un disque 18, 20 portant à sa périphérie externe des aubes 22, et un redresseur 24 situé en aval de la roue et formé d'une rangée annulaire d'aubes fixes de redressement.

Les disques de rotor 18, 20 sont fixés coaxialement les uns aux autres et au rouet 26 de l'étage centrifuge 16 qui est lui-même fixé par un carter cylindrique interne 28 de la chambre de combustion à une roue de rotor de la turbine. Cette roue de turbine est formée par une jante 30 portant à sa périphérie externe des aubes 32.

Les disques 18, 20 du rotor du compresseur sont reliés entre eux et au rouet 26 par des parois 36, 38 de révolution sensiblement cylindriques ou tronconiques qui s'étendent autour de l'axe de rotation du rotor.

La figure 1 montre seulement deux disques 18, 20 du rotor du compresseur. Le disque aval 20 est formé d'une seule pièce avec une paroi amont 36 sensiblement cylindrique de fixation sur le disque amont 18, et avec une paroi aval 38 sensiblement tronconique de fixation sur le rouet 26. L'extrémité amont de la paroi 36 porte une bride annulaire 40 qui est appliquée sur une face radiale aval du disque 18 et fixée sur ce disque par des moyens du type vis/écrou, et l'extrémité aval de la paroi 38 porte une bride annulaire 42 fixée par des moyens du type vis-écrou sur le rouet 26.

De façon connue, les parois 36 et 38 du rotor du compresseur comprennent des léchettes annulaires externes 46 qui coopèrent par frottement avec des éléments en matériau abradable portés par les redresseurs 24 pour former des joints d'étanchéité du type à labyrinthe.

Les moyens de prélèvement d'air centripète sont montés, entre les disques de rotor de deux étages consécutifs du compresseur de la turbomachine. Dans l'exemple représenté, ces moyens sont prévus entre les disques 18 et 20 et comprennent des passages radiaux 48 formés dans la paroi 36 du disque 20, et débouchant dans une chambre annulaire 50 définie par les disques 18, 20 et la paroi 36 de liaison de ces disques. Les moyens de prélèvement comprennent également deux rangées annulaires d'ailettes 44 qui s'étendent sensiblement radialement dans la chambre 50 et qui sont formées d'une seule pièce avec les disques 18 et 20. Les ailettes 44 sont formées sur les faces latérales en regard des disques et s'étendent sur une majeure partie de la dimension radiale de la ceux-ci.

Une partie de l'air circulant dans la veine du compresseur passe radialement de l'extérieur vers l'intérieur à travers les passages 48 de la paroi 36 et pénètre dans la chambre annulaire 50. Une partie de cet air arrive au niveau des faces en regard des disques 18, 20 et s'écoule naturellement le long des disques vers l'axe de rotation (traits pointillés 54). L'autre partie de l'air arrive au niveau du centre de la chambre dans une zone où les recirculations et les turbulences sont importantes (traits pointillés 56). L'air qui sort de la chambre 50 est ensuite guidé axialement de l'amont vers l'aval autour d'un fourreau cylindrique 52 qui s'étend coaxialement à l'intérieur des disques 18, 20 et du rouet 26 du compresseur, et de la jante 30 de la turbine. L'air s'écoule axialement jusqu'à la turbine et peut alimenter des systèmes de refroidissement et/ou de ventilation de composants de cette turbine (traits pointillés 58).

L'air qui s'écoule naturellement de manière centripète le long des disques 18, 20 est contraint par les ailettes à tourner sensiblement à la même vitesse que le rotor du compresseur (Ke = 1). Cependant, ces ailettes ne permettent pas de redresser ni de ralentir l'air dans la zone centrale de la chambre 50 où les pertes de charge sont importantes.

L'invention permet de remédier au moins en partie à ces problèmes grâce à des ailettes de redressement qui sont écartées axialement des disques 18, 20 de rotor et qui sont alignées radialement avec les passages d'air 48 de la paroi de liaison de ces disques.

L'invention permet de diminuer de manière significative les pertes de charge du flux d'air prélevé et d'envisager le prélèvement dé l'air plus en amont sur le compresseur afin de limiter la consommation spécifique: de la turbomachine.

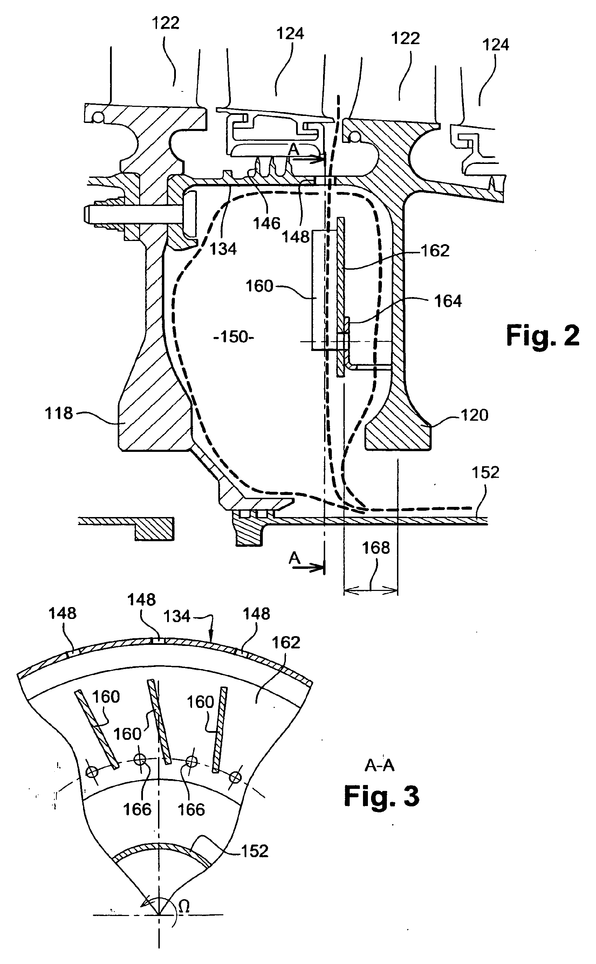

Dans l'exemple représenté aux figures 2 et 3, les éléments déjà décrits en référence à la figure 1 sont désignés par les mêmes chiffres augmentés d'une centaine.

Les ailettes de redressement 160 sont ici formées par des plaquettes planes qui sont portées par un élément annulaire 162 qui est lui-même fixé par des moyens du type vis-écrou ou analogue sur une bride annulaire 164 du disque aval 120. L'élément annulaire 162 est formé par une paroi sensiblement radiale dans l'exemple représenté.

Les ailettes 160 sont régulièrement réparties autour de l'axe du rotor et sont chacune légèrement inclinées par rapport à un rayon passant par cet axe (figure 3) de façon à créer un effet d'aspiration du flux d'air vers l'intérieur en fonctionnement. Ces ailettes 160 sont rapportées et fixées, par exemple par brasage ou soudage, sur une face de l'élément annulaire 162, la face amont dans l'exemple représenté.

Les ailettes 160 s'étendent sur une portion seulement de la dimension radiale de la paroi du disque 120 portant ces ailettes. Les extrémités radialement interne et externe des ailettes 160 sont à distance radiale des bords périphériques interne et externe de la paroi annulaire 162. Les ailettes 160 sont en outre espacées d'une distance radiale donnée de la paroi 136 de liaison des disques.

L'élément annulaire 162 peut être sectorisé ou continu sur 360°. Cet élément forme des moyens de guidage complémentaire du flux d'air sortant des passages 148 de la paroi 136.

L'élément 162 comporte une rangée annulaire d'orifices 166 à proximité de son bord périphérique interne pour le passage des moyens précités du type vis-écrou.

La périphérie interne de l'élément 162 est appliquée sur la bride annulaire 164. du disque 120 qui est agencée en amont de celui-ci. Cette bride 164 est reliée au disque par l'intermédiaire de pattes axiales qui sont espacées les unes des autres de façon à autoriser l'écoulement d'air centripète entre ces pattes le long du disque 120, entre ce disque et l'élément 162.

La distance axiale 168 entre l'élément 162 et le disque 120 est déterminée de façon à ce que les ailettes 160 soient sensiblement alignées en direction radiale avec les passages 148 de sortie d'air, comme cela est visible en figure 2.

En fonctionnement, une partie de l'air sortant des passages 148 est alors aspirée par ces ailettes 160 qui tournent à la même vitesse que le rotor du compresseur et qui permettent donc de redresser l'air prélevé dés sa sortie et de réduire la vitesse de cet air afin qu'elle ne dépasse pas celle du rotor ((Ke = 1). L'invention permet donc d'éviter la formation de tourbillons dans le centre de la chambre 150, et donc de limiter les pertes de charge du flux d'air prélevé. L'autre partie de l'air prélevé s'écoule de manière naturelle le long des disques 118, 120 vers l'axe du rotor, en formant des couches d'Ekman.

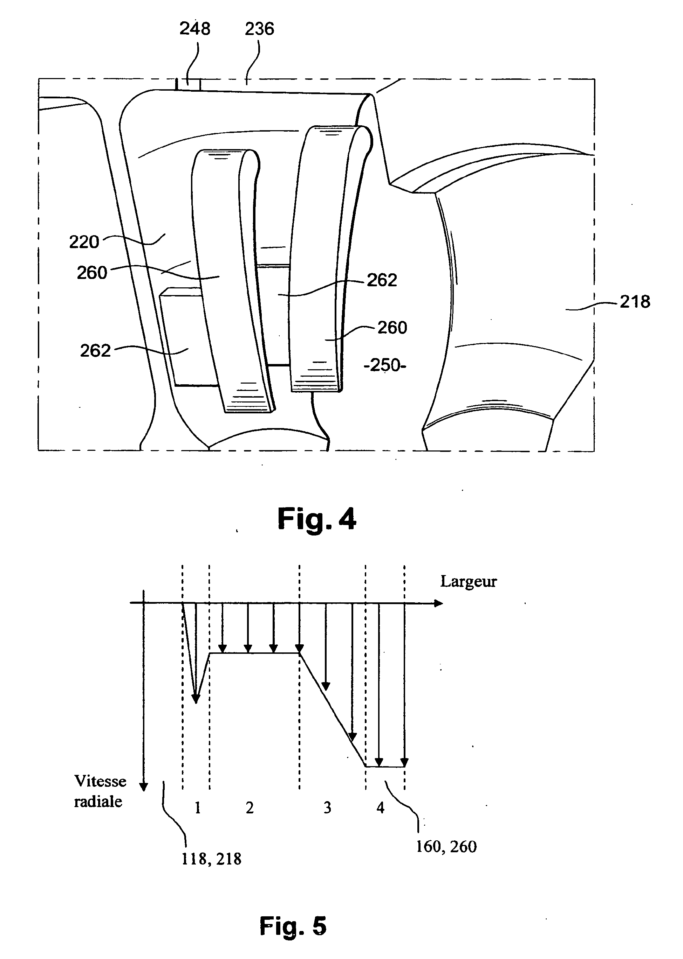

Dans la variante représentée en figure 4, les ailettes 260 sont formées par des aubes comportant chacune un bord d'attaque et un bord de fuite de l'air prélevé, le bord d'attaque étant radialement à l'extérieur et le bord de fuite étant radialement à l'intérieur.

Les ailettes 260 sont régulièrement réparties autour de l'axe du rotor, et peuvent être légèrement inclinées par rapport à cet axe pour assurer l'effet d'aspiration précité.

Les ailettes 260 sont reliées indépendamment les unes des autres au disque 220 par des organes de support 262. Ces organes 262 sont formés dans l'exemple représenté par de petites plaques sensiblement rectangulaires s'étendant radialement autour de l'axe du rotor, et intercalées entre les ailettes 260 et le disque 220. Chaque organe 262 s'étend sur une demi-portion environ de la dimension radiale d'une ailette 260. Ces organes 262 autorisent l'écoulement d'air centripète entre eux, le long du disque 220. Les ailettes 260 sont à une distance axiale du disque 220 et une distance radiale de la paroi 236 de façon à être placées sensiblement au centre de la chambre 250, et à être alignées sensiblement radialement avec les passages d'air 248 de la paroi 236.

Dans une autre variante non représentée, les passages 148, 248 de prélèvement d'air sont formés sur une partie d'extrémité amont de la paroi 136, 236, par exemple en amont des léchettes de cette paroi. Dans encore une autre variante, les ailettes de redressement 160, 260 sont portées par le disque amont 118, 218.

La température de l'air prélevé est de l'ordre de 500°K et le débit d'air prélevé est de l'ordre de 100 g/s.

La figure 5 montre le profil de la vitesse radiale de l'air le long de la largeur de la chambre inter-disques 150, 250, à un rayon donné. On y voit, de gauche à droite sur le dessin, l'influence des couches d'Ekman sur la vitesse de l'air s'écoulant sur le disque amont 118, 218 (zone 1), puis une partie à plus faible vitesse radiale (zone 2), suivie d'un entraînement centripète progressif de l'air provoqué par les frottements visqueux avec l'air s'écoulant entre les ailettes 160, 260 (zone 3), et enfin la plus grande vitesse radiale de l'air passant entre ces ailettes (zone 4).

## Revendications

1. Rotor de compresseur d'une turbomachine, comprenant au moins deux disques coaxiaux (118, 120) portant des aubes et reliés entre eux par une paroi de révolution coaxiale (136) sensiblement cylindrique, et des moyens de prélèvement d'air centripète comportant des passages d'air (148) traversant la paroi et débouchant dans une chambre annulaire (150) formée à l'intérieur de la paroi entre les disques, et des ailettes (160) sensiblement radiales portées par un des disques, **caractérisé en ce que** les ailettes sont écartées axialement du disque et alignées en direction radiale avec les passages de la paroi, ces ailettes étant reliées uniquement par une de leurs extrémités axiales au disque.

2. Rotor selon la revendication 1, **caractérisé en ce que** les ailettes (160) sont régulièrement réparties autour de l'axe du rotor.

3. Rotor selon la revendication 1 ou 2, **caractérisé en ce que** chaque ailette (160) est inclinée par rapport à un rayon passant par l'axe du rotor.

4. Rotor selon l'une des revendications précédentes, **caractérisé en ce que** les ailettes (160) sont des plaquettes planes.

5. Rotor selon l'une des revendications 1 à 3, **caractérisé en ce que** les ailettes (260) sont des aubes comportant chacune un bord d'attaque radialement externe et un bord de fuite radialement interne.

6. Rotor selon l'une des revendications précédentes, **caractérisé en ce que** les ailettes (260) sont reliées indépendamment les unes des autres au disque (220).

7. Rotor selon la revendication 6, **caractérisé en ce que** chaque ailette (260) est fixée par un élément (262) à orientation sensiblement radiale sur le disque (220).

8. Rotor selon l'une des revendications 1 à 5, **caractérisé en ce que** les ailettes (160) sont rapportées et fixées sur un élément annulaire (162) sensiblement radial qui est fixé, par exemple par des moyens du type vis-écrou, sur une bride annulaire (164) du disque (120).

9. Rotor selon l'une des revendications précédentes, **caractérisé en ce que** les extrémités radialement externes des ailettes (160) sont séparées radialement d'une distance donnée de la paroi (136) comportant les passages d'air (148).

10. Rotor selon l'une des revendications précédentes, **caractérisé en ce que** les ailettes (160) s'étendent sur une portion de la dimension radiale du disque (120) de support de ces ailettes.

11. Rotor selon l'une des revendications précédentes, **caractérisé en ce que** les passages d'air (148) sont formés dans la paroi (136), en aval d'un joint à labyrinthe (146) destiné à coopérer avec un redresseur monté entre les deux disques (118, 120) du rotor, et les ailettes sont portées par le disque aval (120) délimitant la chambre.

12. Rotor selon l'une des revendications précédentes, **caractérisé en ce que** les ailettes (160) ont une dimension axiale inférieure à la moitié de la distance axiale entre les disques (118, 120).

13. Turbomachine, telle qu'un turboréacteur ou un turbopropulseur d'avion, **caractérisée en ce qu'**elle comprend un rotor selon l'une des revendications précédentes.

## Patentansprüche

1. Rotor für den Verdichter einer Turbomaschine bzw. eines Turbotriebwerks, enthaltend zumindest zwei koaxial verlaufende Scheiben (118, 120), die Schaufeln tragen und über eine im Wesentlichen zylindrische, koaxial verlaufende Umlaufwand (136) miteinander verbunden sind, sowie Mittel zur zentripetalen Luftentnahme mit Luftdurchlässen (148), die sich durch die Wand hindurch erstrecken und in eine ringförmige Kammer (150) münden, die innerhalb der Wand zwischen den Scheiben ausgebildet ist, und im Wesentlichen radial verlaufende Rippen (160), die von einer der Scheiben getragen werden, **dadurch gekennzeichnet, dass** die Rippen axial von der Scheibe beabstandet sind und in radialer Richtung mit den Durchlässen in der Wand fluchtend ausgerichtet sind, wobei diese Rippen mit nur einem ihrer axialen Enden mit der Scheibe verbunden sind.

2. Rotor nach Anspruch 1, **dadurch gekennzeichnet, dass** die Rippen (160) gleichmäßig um die Achse des Rotors herum verteilt sind.

3. Rotor nach Anspruch 1 oder 2, **dadurch gekennzeichnet, dass** jede Rippe (160) in Bezug auf einen durch die Achse des Rotors gehenden Radius geneigt verläuft.

4. Rotor nach einem der vorangehenden Ansprüche, **dadurch gekennzeichnet, dass** die Rippen (10) ebene Platten sind.

5. Rotor nach einem der Ansprüche 1 bis 3, **dadurch gekennzeichnet, dass** die Rippen (260) Schaufeln sind, die jeweils eine radial äußere Eintrittskante und eine radial innere Austrittskante aufweisen.

6. Rotor nach einem der vorangehenden Ansprüche, **dadurch gekennzeichnet, dass** die Rippen (260) unabhängig voneinander mit der Scheibe (220) verbunden sind.

7. Rotor nach Anspruch 6, **dadurch gekennzeichnet, dass** jede Rippe (260) über ein im Wesentlichen radial ausgerichtetes Bauteil (262) an die Scheibe (220) befestigt ist.

8. Rotor nach einem der Ansprüche 1 bis 5, **dadurch gekennzeichnet, dass** die Rippen (160) an ein im Wesentlichen radial verlaufendes ringförmiges Bauteil (162) angesetzt und daran befestigt sind, das beispielsweise über Mittel wie Schrauben/Muttern an einen ringförmigen Flansch (164) der Scheibe (120) befestigt ist.

9. Rotor nach einem der vorangehenden Ansprüche, **dadurch gekennzeichnet, dass** die radial äußeren Enden der Rippen (160) durch einen gegebenen Abstand von der Wand (136) mit den Luftdurchlässen (148) radial getrennt sind.

10. Rotor nach einem der vorangehenden Ansprüche, **dadurch gekennzeichnet, dass** die Rippen (160) sich über einen Abschnitt der radialen Abmessung der Tragscheibe (120) zum Tragen dieser Rippen erstrecken.

11. Rotor nach einem der vorangehenden Ansprüche, **dadurch gekennzeichnet, dass** die Luftdurchlässe (148) in der Wand (136) stromabwärts von einer Labyrinthdichtung (146) ausgebildet sind, die dazu bestimmt ist, mit einem Gleichtrichter zusammenzuwirken, der zwischen den beiden Scheiben (118, 120) des Rotors montiert ist, und die Rippen von der stromabwärtigen Scheibe (120) getragen werden, welche die Kammer eingrenzt.

12. Rotor nach einem der vorangehenden Ansprüche, **dadurch gekennzeichnet, dass** die Rippen (160) eine axiale Abmessung haben, die geringer als der halbe axiale Abstand zwischen den Scheiben (118, 120) ist.

13. Turbomaschine bzw. Turbotriebwerk, wie etwa Turbostrahltriebwerk oder Turbopropellertriebwerk für Flugzeuge, **dadurch gekennzeichnet, dass** sie bzw. es einen Rotor nach einem der vorangehenden Ansprüche aufweist.

## Claims

1. A turbomachine compressor rotor, comprising at least two blade-carrying disks (118, 120) on a commor axis and connected together by a coaxial wall (136) forming a substantially cylindrical surface of revolution, and centripetal air bleed means comprising both air passages (148) passing through the wall and opening out into an annular chamber (150) formed inside the wall and between the disks, and also substantially radial fins (160) carried by one of the disks, the rotor being **characterized in that** the fins are axially spaced apart from the disks and are substantially in radial alignment with the passages through the wall, said fins being connected solely at one of their axial ends to support means that are fastened to the disk.

2. A rotor according to claim 1, **characterized in that** the fins (160) are regularly distributed around the axis of the rotor.

3. A rotor according to claim 1 or claim 2, **characterized in that** each fin (160) is inclined relative to a radius passing through the axis of the rotor.

4. A rotor according to any preceding claim, **characterized in that** the fins (160) are plane plates.

5. A rotor according to any one of claims 1 to 3, **characterized in that** the fins (260) are airfoils, each having a radially outer leading edge and a radially inner trailing edge.

6. A rotor according to any preceding claim, **characterized in that** the fins (260) are connected to the disk (220) independently of one another.

7. A rotor according to claim 6, **characterized in that** each fin (260) is fastened to the disk (220) by an element (262) of substantially radial orientation.

8. A rotor according to any one of claims 1 to 5, **characterized in that** the fins (160) are fitted and fastened to a substantially radial annular element (162) that is itself fastened to an annular flange (164) of the disk (120), e.g. by nut-and-bolt type means.

9. A rotor according to any preceding claim, **characterized in that** the radially outer ends of the fins (160) are radially spaced apart from the wall (136) including the air passages (148) by a given distance.

10. A rotor according to any preceding claim, **characterized in that** the fins (160) extend over a fraction of the radial dimension of the disk (120) supporting the fins.

11. A rotor according to any preceding claim, **characterized in that** the air passages (148) are formed through the wall (136) downstream from a labyrinth seal (146) for co-operating with a nozzle mounted between the two disks (118, 120) of the rotor, and the fins are carried by the downstream disk (120) defining the chamber.

12. A rotor according to any preceding claim, **characterized in that** the fins (160) have an axial dimension less than half the axial distance between the disks (118, 120).

13. A turbomachine such as an airplane turboprop or turbojet, **characterized in that** it includes a rotor according to any preceding claim.
